# EUROPÄISCHE PATENTSCHRIFT

(11) **EP 3 094 545 B1**
(45) Veröffentlichungstag und Bekanntmachung des Hinweises auf die Patenterteilung: **10.06.2020**
(21) Anmeldenummer: 14799753.0
(22) Anmeldetag: 17.11.2014
(51) Int. Cl.: B62K 25/28, B62K 11/10

(54) **ANORDNUNG ZUR SCHWINGUNGSENTKOPPLUNG EINES MOTORS FÜR MOTORISIERTE ZWEIRADFAHRZEUGE MIT EINER TRIEBSATZSCHWINGE**
ARRANGEMENT FOR THE VIBRATION DECOUPLING OF A MOTOR FOR MOTORIZED TWO-WHEELERS, HAVING A ENGINE-MOUNT SWING ARM
ENSEMBLE DE DÉCOUPLAGE D'UN MOTEUR VIS-À-VIS DE VIBRATIONS POUR VÉHICULES MOTORISÉS À DEUX ROUES COMPRENANT UNE BIELLE D'ENSEMBLE DE PROPULSION

(30) Priorität: 17.01.2014 DE 102014200765
(43) Veröffentlichungstag der Anmeldung: 23.11.2016
(73) Patentinhaber: Bayerische Motoren Werke Aktiengesellschaft, 80809 München (DE)
(72) Erfinder: PLATZ, Christoph, 85716 Unterschleißheim (DE)
(86) Internationale Anmeldenummer: PCT/EP2014/074725
(87) Internationale Veröffentlichungsnummer: WO 2015/106853

(56) Entgegenhaltungen:
- EP-A1- 1 964 768
- EP-A2- 1 457 413
- DE-T2- 69 601 200
- DE-U1-202007 014 473
- JP-A- H05 178 267

## Beschreibung

Die Erfindung betrifft eine Anordnung zur Schwingungsentkopplung eines Motors für motorisierte Zweiradfahrzeuge mit einer Triebsatzschwinge gemäß den Merkmalen von Anspruch 1. Die Erfindung betrifft daher eine Anordnung zur Schwingungsentkopplung eines Motors für motorisierte Zweiradfahrzeuge, insbesondere für Roller mit einem Rollertriebwerk, die mit einer Triebsatzschwinge zur Schwingungsentkopplung des Motors ausgebildet sind.

### Gebiet der Erfindung

Triebsatzschwingen sind im Stand der Technik bereits in unterschiedlichsten Ausgestaltungen bekannt. Triebsatzschwingen werden zur Motorenentkopplung von Motorenaufhängungen verwendet. So verwendet z.B. die Piaggio Beverly eine Doppelschwinge. Andererseits gibt es auch Konstruktionen, bei denen die Motoraufhängung mittels einer Einfachschwinge entkoppelt ist, so wie dies beispielsweise bei der Honda PCX oder der Kymco Downtown 300i der Fall ist.

Die Notwendigkeit solcher im Stand der Technik bekannter Konstruktionen ergibt sich aus dem Umstand, dass alle bekannten Motorrollerkonstruktionen, insbesondere solche Konstruktionen mit einer Triebsatzschwinge, eine herkömmliche Abfederung des Hinterrads besitzen. So wird typischerweise die Triebsatzschwinge über ein Federbein am Hinterrahmen abgestützt. Zur Behebung der Problematik der Schwingungsentkopplung zwischen Rahmen und Triebsatzschwinge verwendet man zum Beispiel elastische Buchsen oder gedämpfte Zwischenhebel, die jedoch in der Elastizität bzw. der möglichen Bewegungsrichtung zumeist keinem Zwang unterliegen.

Aus der JP 2005255163A ist eine Konstruktion für einen Roller bekannt, die eine schwingende Anordnung einer Antriebseinheit zeigt. Die Triebsatzschwinge ist hier an einem Verbindungsabschnitt gelagert und weist ferner eine Druckstange auf.

Aus der FR 2907417A ist ein weiteres Beispiel einer Triebsatzschwinge gezeigt, die mit einer Aufhängevorrichtung ausgebildet ist und eine aus einem dämpfenden Material gebildete Klemme und zwei Schwingstangen aufweist. Die beiden Schwingstangen sind im Winkel zueinander versetzt angeordnet, und zwar in einem Winkel zwischen etwa 75° und etwa 105°, vorzugsweise von etwa 90° gegeneinander versetzt. Eine erste Reaktionsstange, die zwischen dem ersten Ende wenigstens einer der Schwingstangen und dem Chassis liegt, verläuft etwa vertikal und eine zweite Reaktionsstange, die zwischen der zweiten Schwingstange und dem Chassis liegt, verläuft etwa horizontal. Das erste Ende der ersten etwa vertikalen Reaktionsstange ist mit dem ersten Ende der zweiten Schwingstange verbunden. Das zweite Ende der ersten Schwingstange umfasst seitliche Aufbauteile und/oder ein transversales Rohr zur Montage am Chassis des Fahrzeuges. Die Schwingstangen sind ferner als mechanisch geschweißte Schwingstangen ausgeführt.

Aus der EP 2275333A2 ist eine weitere Entkopplung eines Triebsatzes gezeigt. Diese Ausführung soll Vibrationen absorbieren, die nicht nur in Auf-und-Ab-und Hin-und Her-Richtung erfolgen, sondern auch in einer Richtung der Fahrzeugbreite. Die Aufhängevorrichtung für die Schwinge umfasst einen Fahrzeugrahmen, die Antriebseinheit zum Zuführen einer Antriebskraft auf die Hinterräder, ein Gelenkmechanismus zum Bewegen der Vorderseite der Antriebseinheit an dem Fahrzeugkarosserierahmen und eine hintere Dämpfereinheit zum Aufhängen der Rückseite der Antriebseinheit am Fahrzeugkarosserierahmen. Ferner ist eine Verbindungsstange an dem Gelenkmechanismus angeordnet, die elastisch abgestützt ist, sowie ein elastisches Element zum Anliegen an dem Fahrzeugkarosserierahmen in Querrichtung des Fahrzeugs.

Aus der DE 19751371 ist eine Triebsatzschwinge für motorgetriebene Fahrzeuge wie Motorroller und leichte Fahrzeuge zur Beförderung von Personen bekannt, die über einen im Bereich eines Endes eines langgestreckten Schwingengehäuses angeordneten Antriebsmotor und eine im Bereich des anderen Endes des Schwingengehäuses drehbar gelagerten Nabe zur Halterung eines Fahrzeugantriebsrades versehen sind, wobei die ins Schwingungsgehäuse geführte Antriebswelle des Antriebsmotors durch eine im Schwingengehäuse gekapselte Transmissionseinrichtung mit der Radnabe für das Fahrzeugantriebsrad gekoppelt ist und das Schwingengehäuse Elemente aufweist zur verschwenkbaren Lagerung um eine von der Drehachse der Radnabe beabstandete und parallel zu ihr verlaufenden Achse am oder im Rahmen des Fahrzeugs.

Weitere Anordnungen zur Schwingungsentkopplung sind aus den Schriften DE 20 2007 014 473 U1, EP 1 457 413 A2 und DE 696 01 200 T2 bekannt.

Die Schrift EP 1 964 768 A1 zeigt eine Anordnung zur Schwingungsentkopplung mit den Merkmalen der Präambel des Anspruchs 1.

Solche aus dem Stand der Technik bekannten Triebsatzschwingen weißen verschiedene Nachteile auf, die konstruktiver Natur sind und einen Einfluss auf das Fahrverhalten des Zweirades zeigen und z.B. keinen befriedigenden Nickausgleich aufweisen. Die Lage der Anbindung der Triebsatzschwinge beeinflusst den Anfahrnickausgleich, wie auch den Bremsnickausgleich. Anders ausgedrückt ist es wünschenswert, wenn das Fahrzeug, beim Anfahren und Bremsen nicht ein- oder ausfedert. Der Anfahrnickausgleich wird in der rollertypischen Schwingenanordnung durch die Position der Schwingendreh/-schwenkachse bestimmt.

Es ist daher zur Reduzierung des Nickausgleichs notwendig, eine möglichst optimale Lage der Position der Schwingendreh/-schwenkachse zu verwenden, wobei gleichzeitig andere konstruktive und fahrdynamische Faktoren bei der Konstruktion der Triebsatzschwinge und deren Aufhängung zu berücksichtigen sind. Diese sind von mehreren Faktoren abhängig, so wie der Schwerpunkthöhe des Fahrzeuges mit einem Fahrer, da es sich beim Nickausgleich um eine Fahrzeugreaktion bei der Benutzung des Fahrzeuges handelt.

Die Lage des Schwingendrehpunkts oberhalb der Zylinder, wie diese im Stand der Technik bei den Fahrzeugmodellen Honda PCX125 und Kymco 300-400 realisiert ist, ist für den Anfahrnickausgleich und z.B. die Helmfachgröße nachteilig. Das heißt bei einer Anordnung oberhalb des Zylinders ergeben sich spürbare Nachteile für den Anfahrnickausgleich. Im Stand der Technik wird es versucht, solche Nachteile einer ungünstigen Position der Schwingendreh/-schwenkachse durch Verwendung entsprechend harte Federn zu verringern, wodurch sich wiederum ein nachteiliger Komfort ergibt.

Es besteht daher ein Bedarf, die vorbesagten Nacheile zu überwinden und insbesondere Schwingungsentkopplungsanordnungen für eine Triebsatzschwinge bereit zu stellen, die wenig bis keine negativen Einflüsse auf das Fahrverhalten zeigen, den Nickausgleich reduzieren und insbesondere kostengünstig herstellbar sind.

Der Erfindung liegt daher die Aufgabe zugrunde eine Lösung für eine Schwingungsentkopplung einer Triebsatzschwinge eines motorisierten Zweirads, insbesondere eines Motorrollers, bereit zu stellen, welches einfach aufgebaut ist, mit wenigen Bauteilen realisierbar ist und bei dem Schwingungen wirksam vom Rahmen entkoppelt oder verringert werden.

Erfindungsgemäß wird diese Aufgabe durch eine Anordnung zur Schwinungsentkopplung eines motorisierten Zweiradfahrzeuges mit den Merkmalen von Anspruch 1 gelöst.

Der Grundgedanke der vorliegenden Erfindung liegt darin, die Schwingungsentkopplung eines Motors mit einer Triebsatzschwinge und zwar einer Einfachschwinge zu realisieren, wobei eine mit Puffern ausgebildete Abstützstange an der Triebsatzschwinge so vorgesehen ist, dass eine Schwingungsentkopplung in einer Hauptschwingungsrichtung des Motors und insbesondere in und entgegen der Fahrzeuglängsrichtung erzielt werden kann.

In einer besonders vorteilhaften Ausbildungsform der Erfindung wird die Einfachschwinge daher in einem unteren Bereich und zwar vorzugsweise in einem Bereich unterhalb des Zylinders angeordnet. In einer weiter bevorzugten Ausführungsform betrifft die Erfindung eine Anordnung, bei der das Zweiradfahrzeug mit einem Motor mit Ausgleichswelle zum Ausgleichen der Schwingungen erster Ordnung durch freie Massekräfte vorgesehen ist. Auf diese Weise ergibt sich, dass die vorhandenen Schwingungen und Vibrationen zweiter Ordnung gering sind und im Wesentlichen in Kolbenbewegungsrichtung des Zylinders (Zylinderrichtung) bedeutend sind. Insofern ist die Anordnung erfindungsgemäß so auszubilden, dass die Entkopplung in der Bewegungsrichtung des Kolbens erfolgt.

Erfindungsgemäß wird daher eine Anordnung zur Schwingungsentkopplung eines Motors für motorisierte Zweiradfahrzeuge mit einer Triebsatzschwinge ausgebildet, die drehbar um eine erste Achse gelagert ist, wobei die erste Achse mit einer Entkopplungsschwinge an einer zweiten Achse drehbar am Fahrzeugrahmen des Zweiradfahrzeuges gelagert ist und wobei ferner eine mit Dämpfungspuffern ausgestattete Stange wie z.B. eine Abstützstange an der Triebsatzschwinge vorgesehen ist, deren Orientierung so gewählt wurde, dass eine Schwingungsentkopplung in und entgegen der Fahrzeuglängsrichtung bewirkt wird bzw. dass eine Schwingungsentkopplung in Zylinderachsrichtung bewirkt wird. Mit Vorteil ist die Zylinderachsrichtung so gewählt, dass die erfindungsgemäße Anordnung zur Schwingungsentkopplung gleichzeitig eine Dämpfung bei Bewegungen in Fahrzeuglängsrichtung, wie z.B. beim Überfahren von Straßenunebenheiten bewirkt.

In einer weiter bevorzugten Ausführungsform der Erfindung ist die Anordnung zur Schwingungsentkopplung des Motors mit einer Entkopplungsschwinge (Zwischenschwinge) unterhalb des Zylinders zur Anbindung der Triebsatzschwinge ausgebildet. Hierdurch wird mit Vorteil ein geringer Aufwand und geringer Raumbedarf erzielt und durch die Anordnung unterhalb des Zylinders der Nickausgleich optimiert. Eine solche im Stand der Technik nicht bekannte Ausführungsform bewirkt eine besonders komfortable und platzsparende Schwingungsentkopplung.

Erfindungsgemäß ist die zweite Achse der Entkopplungsschwinge als Entkopplungsachse an rahmenseitigen Befestigungslaschen drehbar an diesen gelagert. In einer weiter bevorzugten Ausführungsform der Erfindung ist die erste Achse als Triebsatzschwingachse unterhalb der zweiten Achse angeordnet.

In einer ebenfalls weiter bevorzugten Ausführungsform der Erfindung ist die Anordnung für ein motorisiertes Zweiradfahrzeug mit einem Einzylindermotor, mit einer Ausgleichsschwelle ausgebildet und daher die Abstützstange entlang der Zylinderachsrichtung orientiert bzw. im Wesentlichen parallel zu dieser ausgebildet. Auf diese Weise können die Schwingungen erster Ordnung durch die Ausgleichsschwelle des Einzylindermotors unmittelbar abgefangen werden, während die Schwingungen zweiter Ordnung in Zylinderrichtung erfolgen. Durch die erfindungsgemäße Orientierung der Entkopplungsschwinge bzw. der Abstützstange mit der Entkopplungsschwinge wird gewährleistet, dass eine effektive Entkopplung der auftretenden Schwingungen erfolgt.

Die Anordnung der Entkopplungsschwinge ist daher bevorzugt so ausgebildet, dass die Verbindungslinie beider Achsen senkrecht zur Zylinderachse oder vertikal dazu ist.

Erfindungsgemäß verfügt die Entkopplungsschwinge über zwei Verbindungsarme mit je einem an beiden Enden angeordnetem Befestigungselement für die jeweiligen Achsen, d.h. die erste Achse und zweite Achse.

Weiter bevorzugt ist es, wenn die Abstützstange an ihrem befestigungsseitigen Ende unmittelbar zusammen mit einem Befestigungselement an der ersten Achse der Triebsatzschwinge befestigt ist. Hierdurch kann eine platzsparende Bauweise erzielt werden, gleichzeitig die Anzahl der beteiligten Bauteile reduziert werden und ferner eine unmittelbar an der Drehachse eingeleitete Dämpfung der Abstützstange mit ihren Dämpfungspuffern erzielt werden.

Es ist weiter von Vorteil, wenn die Abstützstange an ihrem nicht befestigten, d.h. freien Ende mit zwei Gummipuffern versehen ist, wobei jeweils einer der Gummipuffer gegen je einen rahmenseitigen Anschlag gedrückt wird, je nach Bewegung der Triebsatzschwinge in die eine oder die entgegengesetzte Bewegungsrichtung. Weiter bevorzugt ist es daher, wenn die Abstützstange in Fahrzeuglängsrichtung des motorisierten Zweirads und zugleich in Richtung einer Hauptschwingungsachse des Motors bzw. des Zylinders ausgerichtet ist, so dass die Schwingungen des Motors, welche nicht mittels der Ausgleichswelle abgefangen wurden und sekundär die Schwingungen in Zylinderrichtung wirksam durch die erfindungsgemäße Anordnung abgedämpft werden.

Durch eine Auslenkung der hinteren Federbeine aus der Vertikalen kann eine Kraft in (bzw. gegen) Fahrzeugrichtung auf die Triebsatzschwinge wirken. Vorteilhaft ist es wenn diese Längskräfte, wenigstens zu einem gewissen Teil, durch eine entgegengesetzte Kraft, in Längsrichtung des Fahrzeugs, aus der Entkopplungsschwinge wieder aufgehoben werden.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher erläutert. Es zeigen:
- Fig. 1: eine schematische Seitenansicht eines motorisierten Zweirades mit der erfindungsgemäßen Anordnung zur Schwingungsentkopplung;
- Fig. 2: eine detaillierte perspektivische Detailansicht der Triebsatzschwinge aus Figur 1;
- Fig. 3: eine beispielhafte Darstellung der Abstützstange mit Dämpfungspuffer.

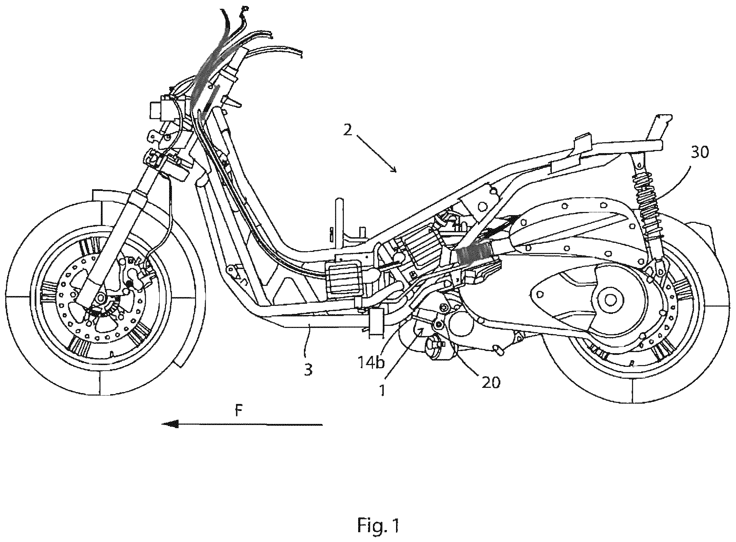

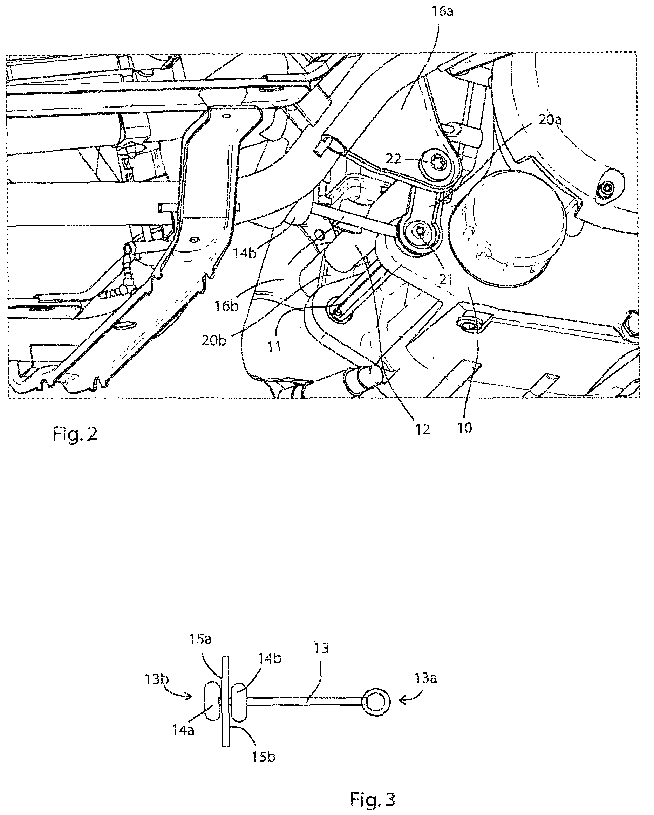

In Fig. 1 ist eine beispielhafte Ansicht von einer Seite eines motorisierten Zweiradfahrzeuges 2 dargestellt, die mit einer erfindungsgemäßen Anordnung 1 zur Schwingungsentkopplung ausgebildet ist. Die Anordnung 1 ist in einer Detailansicht in Fig. 2 dargestellt. Im Folgenden wird auf die Fig. 1 bis 3 gleichermaßen Bezug genommen.

Die Anordnung 1 zur Schwingungsentkopplung ist ausgebildet mit einer Triebsatzschwinge 10, die drehbar um eine erste Achse 11 gelagert ist. Die erste Achse 11 wird im Folgenden auch als Achse der Triebsatzschwinge 10 bezeichnet. Die erste Achse 11 ist mit einer Entkopplungsschwinge 20 an einer zweiten Achse 12 drehbar am Fahrzeugrahmen 3 des Zweiradfahrzeugs 2 gelagert. Ferner ist eine mit Dämpfungspuffern 14a, 14b ausgestattete Abstützstange 13 an der Triebsatzschwinge 10 vorgesehen. Von den Dämpfungspuffern 14a, 14b ist in den Figuren 1 und 2 lediglich der Dämpfungspuffer 14b sichtbar, während sich der zweite Dämpfungspuffer 14a weiter beabstandet am äußeren Ende der Abstützstange 13 befindet, wie in Fig. 3 dargestellt. Zwischen den Dämpfungspuffern 14a, 14b befindet sich jeweils ein rahmenseitiger Anschlag 15a, 15b.

In der vorliegenden Ausführungsform der Erfindung ist die Abstützstange 13 in etwa in Fahrzeuglängsrichtung F bzw. leicht unter einem Winkel von ca. 15° zur Fahrzeuglängsrichtung F verdreht angeordnet. Die Orientierung der Entkopplungsschwinge 20 und der Abstützstange 13 beträgt in etwa einen Winkel von 90°. Anders ausgedrückt bedeutet dies, dass die Abstützstange in etwa in Bewegungsrichtung des Zylinders d.h. in Zylinderrichtung orientiert ist, während die Entkopplungsschwinge 20 in einer dazu orthogonalen Richtung somit in etwa in einer Vertikalrichtung (Querrichtung zur Fahrzeuglängsrichtung) angeordnet ist. Ebenso in einer Vertikalrichtung ist das Federbein 30 angeordnet, welches in Fig. 1 abgebildet ist.

In Fig. 2 ist weiter erkennbar, dass die zweite Achse 12, die als Entkopplungsachse an rahmenseitigen Befestigungslaschen 16a, 16b drehbar an diesen gelagert ist. Die Befestigungslaschen können dabei als Blechlaschen oder Lagerelemente am Rahmen so hervorstehen, dass die zweite Achse 12 zwischen jeweils den Befestigungslaschen 16a, 16b gelagert ist. Die Entkopplungsschwinge 20 verfügt ferner über zwei Verbindungsarme 20a, 20b mit je einem an beiden Enden angeordneten Befestigungselement 21, 22 für die jeweiligen Achsen 11, 12. Die Abstützstange 13 ist mit ihrem befestigungsseitigen Ende 13a unmittelbar zusammen mit einem Befestigungselement 21 der ersten Achse 11 der Triebsatzschwinge 10 befestigt. In einer alternativen Ausführungsform der Erfindung könnten auch zwei Abstützstangen 13 vorzugsweise parallel angeordnet jeweils zusammen mit einem Befestigungselement 21 an einem linken und rechten Ende der ersten Achse an der Triebsatzschwinge mit diesen zusammen befestigt werden.

Die Abstützstange 13 weist an ihrem bewegliche Ende 13b wie zuvor erläutert zwei Dämpfungspuffer 14a, 14 b vorzugsweise ausgebildet als Gummipuffer auf, wobei die Gummipuffer 14a, 14b gegen je einen rahmenseitigen Anschlag 15a, 15b gedrückt werden, je nach Bewegungsrichtung der Triebsatzschwinge in die eine oder in die entgegengesetzte Bewegungsrichtung.

In der vorliegenden Ausführungsform der Erfindung ist der rahmenseitige Anschlag so angeordnet, dass die Abstützstange durch eine Rahmenöffnung hindurch ragt und zwar durch eine Öffnung im rahmenseitigen Anschlag hindurch ragt, um mit dem ersten Gummipuffer 14b sich gegen den Anschlag in Fahrtrichtung abstützen kann, während sie sich entgegen der Fahrtrichtung mit dem ersten Puffer 14a an der gegenüberliegenden Seite des rahmenseitigen Anschlags abstützen kann. Anders ausgedrückt kann die Abstützstange durch eine Öffnung im Rahmen jeweils die Schwingungen über die Puffer 14a, 14b geeignet abdämpfen.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht.

## Patentansprüche

1. Anordnung (1) zur Schwingungsentkopplung eines Motors für motorisierte Zweiradfahrzeuge (2) mit einer Triebsatzschwinge (10), die drehbar um eine erste Achse (11) gelagert ist,
wobei die erste Achse (11) mit einer Entkopplungsschwinge (20) an einer zweiten Achse(12) drehbar am Fahrzeugrahmen (3) des Zweiradfahrzeuges (2) gelagert ist
und wobei ferner eine mit Dämpfungspuffern (14a, 14b) ausgestattete Abstützstange (13) an der Triebsatzschwinge (10) vorgesehen ist, deren Orientierung so gewählt ist, dass eine Schwingungsentkopplung in und entgegen der Fahrzeuglängsrichtung (F) und/oder Zylinderrichtung bewirkt wird,
wobei die zweite Achse (12) als Entkopplungsachse an rahmenseitigen Befestigungslaschen (16a, 16b) drehbar gelagert ist, **dadurch gekennzeichnet, dass** die Entkopplungsschwinge (20) die zweite Achse (12) und zwei Verbindungsarme (20a, 20b) mit je einem an beiden Enden angeordnetem Befestigungselement (21, 22) für die erste und zweite Achse (11, 12) aufweist.

2. Anordnung (1) gemäß Anspruch 1, **dadurch gekennzeichnet, dass** die Anordnung für ein motorisiertes Zweiradfahrzeug (2) mit einem Einzylindermotor ausgestattet mit einer Ausgleichwelle ausgebildet ist und die Abstützstange (13) entlang der Zylinderachsrichtung orientiert ist.

3. Anordnung (1) gemäß Anspruch 1, **dadurch gekennzeichnet, dass** die Anordnung zur Schwingungsentkopplung des Motors mit einer Einfachschwinge als Entkopplungsschwinge (10) ausgebildet ist.

4. Anordnung (1) gemäß einem der Ansprüche 1, 2 oder 3, **dadurch gekennzeichnet, dass** die Entkopplungsschwinge (10) unterhalb des Zylinders angeordnet ist.

5. Anordnung (1) gemäß einem der Ansprüche 1 bis 4, **dadurch gekennzeichnet, dass** die erste Achse (11) als Triebsatzschwingachse lotrecht oder senkrecht unterhalb der zweiten Achse (12) angeordnet ist.

6. Anordnung (1) gemäß einem der Ansprüche 1 bis 5, **dadurch gekennzeichnet, dass** die Abstützstange (13) an ihrem befestigungsseitigen Ende (13a) unmittelbar zusammen mit einem Befestigungselement (21) der ersten Achse (11) der Triebsatzschwinge (10) befestigt ist.

7. Anordnung (1) gemäß einem der Ansprüche 1 bis 6, **dadurch gekennzeichnet, dass** die Abstützstange (13) an ihrem beweglichen Ende (13b) mit je einem Gummipuffer (14a, 14b) versehen ist, wobei die Gummipuffer (14a, 14b) gegen je einen rahmenseitigen Anschlag (15a, 15b) gedrückt werden, je nach Bewegungsrichtung der Triebsatzschwinge (10) in die eine oder die entgegengesetzte Bewegungsrichtung.

8. Anordnung (1) gemäß einem der Ansprüche 1 bis 7, **dadurch gekennzeichnet, dass** die Abstützstange (13) in Fahrzeuglängsrichtung (F) des motorisierten Zweirades und/oder in einer Hauptschwingungsachse des Motors oder des Zylinders ausgerichtet ist.

## Claims

1. Arrangement (1) for vibration decoupling of an engine for motorized two-wheeled vehicles (2) having a drive unit swinging fork (10) which is mounted so as to be rotatable about a first axle (11), wherein the first axle (11) is mounted rotatably on the vehicle frame (3) of the two-wheeled vehicle (2) by means of a decoupling swinging fork (20) on a second axle (12), and wherein, furthermore, a support rod (13) equipped with damping buffers (14a, 14b) is provided on the drive unit swinging fork (10), the orientation of which support rod is selected such that vibration decoupling is effected in and counter to the vehicle longitudinal direction (F) and/or cylinder direction, wherein the second axle (12) is, as decoupling axle, mounted rotatably on frame-side fastening lugs (16a, 16b), **characterized in that** the decoupling swinging fork (20) has the second axle (12) and two connecting arms (20a, 20b) with in each case one fastening element (21, 22) arranged at both ends for the first and second axle (11, 12).

2. Arrangement (1) according to Claim 1, **characterized in that** the arrangement is designed for a motorized two-wheeled vehicle (2) with a single-cylinder engine equipped with a balancing shaft, and the support rod (13) is oriented along the cylinder axis direction.

3. Arrangement (1) according to Claim 1, **characterized in that** the arrangement for vibration decoupling of the engine is formed with a single swinging fork as decoupling swinging fork (10).

4. Arrangement (1) according to any of Claims 1, 2 and 3, **characterized in that** the decoupling swinging fork (10) is arranged below the cylinder.

5. Arrangement (1) according to any of Claims 1 to 4, **characterized in that** the first axle (11) is, as a drive unit swinging axle, arranged vertically or perpendicularly below the second axle (12).

6. Arrangement (1) according to any of Claims 1 to 5, **characterized in that** the support rod (13) is, at its fastening-side end (13a), fastened directly together with a fastening element (21) of the first axle (11) of the drive unit swinging fork (10).

7. Arrangement (1) according to any of Claims 1 to 6, **characterized in that** the support rod (13) is, at its movable end (13b), equipped with in each case one rubber buffer (14a, 14b), wherein the rubber buffers (14a, 14b) are pressed against in each case one frame-side stop (15a, 15b) depending on the movement direction of the drive unit swinging fork (10) in one or the opposite movement direction.

8. Arrangement (1) according to any of Claims 1 to 7, **characterized in that** the support rod (13) is oriented in the vehicle longitudinal direction (F) of the motorized two-wheeled vehicle and/or in a main axis of vibration of the engine or of the cylinder.

## Revendications

1. Dispositif (1) de découplage en vibrations d'un moteur de véhicules à deux roues motorisés (2), ledit dispositif comprenant un bras oscillant d'unité d'entraînement (10) qui est monté de manière rotative sur un premier axe (11),
le premier axe (11) pourvu d'un bras oscillant de découplage (20) étant monté de manière rotative sur un deuxième axe (12) sur le châssis (3) du véhicule à deux roues (2)
et en outre une barre de support (13) équipée de tampons amortisseurs (14a, 14b) étant prévue sur le bras oscillant d'unité d'entraînement (10) dont l'orientation est choisie de façon à effectuer un découplage en vibrations dans le sens longitudinal (F) du véhicule et dans le sens opposé à celui-ci et/ou le sens des cylindres et dans le sens opposé à celui-ci,
le deuxième axe (12) étant monté de manière rotative en tant qu'axe de découplage sur des attaches de fixation côté châssis (16a, 16b), **caractérisé en ce que** le bras oscillant de découplage (20) comporte le deuxième axe (12) et deux bras de liaison (20a, 20b), chacun étant pourvu d'un élément de fixation (21, 22) disposé aux deux extrémités et destiné aux premier et deuxième axes (11, 12) .

2. Dispositif (1) selon la revendication 1, **caractérisé en ce que** le dispositif destiné à un véhicule à deux roues motorisé (2) est conçu avec un moteur monocylindre pourvu d'un arbre d'équilibrage et la barre de support (13) est orientée selon la direction de l'axe du cylindre.

3. Dispositif (1) selon la revendication 1, **caractérisé en ce que** le dispositif est conçu avec un seul bras oscillant utilisé comme bras oscillant de découplage (10) pour découpler en vibrations le moteur.

4. Dispositif (1) selon l'une des revendications 1, 2 et 3, **caractérisé en ce que** le bras oscillant de découplage (10) est disposé au-dessous du cylindre.

5. Dispositif (1) selon l'une des revendications 1 à 4, **caractérisé en ce que** le premier axe (11) est disposé en tant qu'axe de bras oscillant d'unité d'entraînement verticalement ou perpendiculairement au-dessous du deuxième axe (12).

6. Dispositif (1) selon l'une des revendications 1 à 5, **caractérisé en ce que** la barre de support (13) est fixée à son extrémité côté fixation (13a) directement avec un élément de fixation (21) du premier axe (11) du bras oscillant d'unité d'entraînement (10).

7. Dispositif (1) selon l'une des revendications 1 à 6, **caractérisé en ce que** la barre de support (13) est pourvue à son extrémité mobile (13b) d'un tampon en caoutchouc (14a, 14b), les tampons en caoutchouc (14a, 14b) étant pressés contre une butée côté châssis (15a, 15b), en fonction du sens de déplacement du bras oscillant d'unité d'entraînement (10) dans un sens de déplacement ou dans le sens opposé à celui-ci.

8. Dispositif (1) selon l'une des revendications 1 à 7, **caractérisé en ce que** la barre de support (13) est orientée dans la direction longitudinale du véhicule (F) du deux-roues motorisé et/ou dans un axe de vibration principal du moteur ou du cylindre.
